# FASCICULE DE BREVET EUROPEEN

(11) **EP 3 038 007 B1**
(45) Date de publication et mention de la délivrance du brevet: **02.05.2018**
(21) Numéro de dépôt: 15202635.7
(22) Date de dépôt: 23.12.2015
(51) Int. Cl.: G06F 21/56, H04L 29/06

(54) **PROCÉDÉ DE MISE EN OEUVRE D'UN ALGORITHME DE DÉTERMINATION DE SÛRETÉ DE FICHIERS INFORMATIQUES, MODULE DE DÉTERMINATION, PROCÉDÉ DE CONSTRUCTION D'UNE UNITÉ DE CONTRÔLE ET PRODUIT PROGRAMME D'ORDINATEUR ASSOCIÉS**
VERFAHREN ZUR UMSETZUNG EINES ALGORITHMUS ZUR BESTIMMUNG DER SICHERHEIT VON IT-DATEIEN, ENTSPRECHENDES BESTIMMUNGSMODUL, HERSTELLUNGSVERFAHREN EINER SOLCHEN STEUEREINHEIT UND ENTSPRECHENDES COMPUTERPROGRAMMPRODUKT
METHOD OF IMPLEMENTATION OF COMPUTER FILES SECURITY DETERMINATION, ASSOCIATED DETERMINATION MODULE, METHOD OF CONSTRUCTION OF A CONTROL UNITY AND COMPUTER PROGRAM PRODUCT

(30) Priorité: 23.12.2014 FR 1402977
(43) Date de publication de la demande: 29.06.2016
(73) Titulaire: THALES, 92400 Courbevoie (FR)
(72) Inventeur: NOGUES, Damien, 92622 GENNEVILLIERS (FR)
(74) Mandataire: Lavoix

(56) Documents cités:
- WO-A1-2014/122662
- Hasan Ibne Akram: "Malware Detection with Machine Learning Methods, Lecture 11: Grammatical Inference", Lectures at TU Munich, 14 janvier 2010 (2010-01-14), XP055198587, Extrait de l'Internet: URL:https://www.sec.in.tum.de/assets/lehre /ws0910/ml/Gramatical-Inference-Lecture-21 4012010.pdf [extrait le 2015-06-26]
- HASAN IBNE AKRAM ET AL: "Grammatical Inference Algorithms in MATLAB", 13 septembre 2010 (2010-09-13), GRAMMATICAL INFERENCE: THEORETICAL RESULTS AND APPLICATIONS, SPRINGER BERLIN HEIDELBERG, BERLIN, HEIDELBERG, PAGE(S) 262 - 266, XP019150384, ISBN: 978-3-642-15487-4 * page 1 - page 4 *
- Christie Williams: "Applications of Genetic Algorithms to Malware Detection and Creation", , 16 décembre 2009 (2009-12-16), XP055198440, Extrait de l'Internet: URL:http://www.cs.colostate.edu/~anderson/ cs545/assignments/solutionsGoodExamples/as signment8Williams.pdf [extrait le 2015-06-25]
- KOMPALLI SARAT: "Using Existing Hardware Services for Malware Detection", 2014 IEEE SECURITY AND PRIVACY WORKSHOPS, IEEE, 17 mai 2014 (2014-05-17), pages 204-208, XP032686211, DOI: 10.1109/SPW.2014.49

## Description

La présente invention concerne un procédé de mise en oeuvre d'un algorithme de détermination de sûreté de fichiers informatiques pour détecter des fichiers sains et des fichiers infectés par un logiciel malveillant.

On entend par logiciel malveillant, tout programme informatique développé dans le but d'être exécuté sur un système informatique sans consentement d'un ou plusieurs utilisateurs concernés. Après son exécution, un tel programme est souvent apte à nuire au système informatique ou aux données informatiques qu'il contient.

Les logiciels malveillants sont souvent transmis d'un système informatique vers un autre via un réseau informatique tel qu'Internet par exemple. Une telle transmission peut être effectuée en utilisant différentes voies de transmission.

Ainsi, il est connu une voie de transmission selon laquelle des logiciels malveillants s'intègrent dans des fichiers informatiques circulant normalement dans le réseau et restent invisibles pour l'utilisateur. Ces fichiers sont alors infectés par les logiciels malveillants.

Les fichiers infectés comprennent notamment des fichiers fréquemment échangés entre les utilisateurs comme par exemple, les fichiers du type PDF (de l'anglais « Portable Document Format ») transmis via le courrier électronique.

De manière générale, le logiciel malveillant reste inactif et caché dans le fichier infecté jusqu'au moment où le fichier est exécuté ou ouvert par un utilisateur ou un autre logiciel. Ainsi, lorsqu'il s'agit par exemple d'un fichier infecté du type PDF, une simple ouverture de ce fichier suffit pour activer le logiciel malveillant.

Lorsque l'exécution ou l'ouverture du fichier est effectuée, le logiciel malveillant s'exécute dans le système informatique de manière indépendante du fichier infecté ce qui peut conduire à des conséquences importantes dans le fonctionnement de ce système.

La détection de fichiers infectés présente ainsi un problème important dans le domaine de sécurité informatique.

Pour remédier à ce problème, différentes méthodes sont déjà connues dans l'état de la technique.

Une partie majeure de ces méthodes est basée sur la recherche d'une signature connue des logiciels malveillants dans l'ensemble de fichiers informatiques entrants dans le système informatique correspondant ou présents dans celui-ci.

Une telle recherche est souvent effectuée dans la représentation binaire de chaque fichier à contrôler ce qui permet d'éviter l'exécution du fichier et la propagation d'un logiciel malveillant lorsque celui-ci est infecté.

Les signatures de logiciels malveillants connus peuvent être généralement obtenues par des logiciels antivirus via par exemple, sur Internet où elles sont mises à jour au fur et à mesure que des nouveaux logiciels malveillants sont découverts.

On connait par ailleurs le document WO 2014/122662 A1 décrivant un algorithme de détermination de sûreté de fichiers informatiques ou encore le document Hasan Ibne Arkam « Malware Detection with Machine Learning Methods, Lecture 11 : Grammatical Inference » décrivant l'utilisation des automates finis dans l'apprentissage par machine.

Toutefois, les méthodes de détection de fichiers infectés par la recherche des signatures connues, ne sont pas complètement satisfaisantes.

En particulier, ces méthodes ne permettent pas de détecter des fichiers infectés par des logiciels malveillants modifiés pour ne plus correspondre aux signatures connues ou par des nouveaux logiciels malveillants dont les signatures ne sont pas encore disponibles.

La présente invention a pour but de remédier à cet inconvénient.

À cet effet, l'invention a pour objet un procédé de mise en oeuvre d'un algorithme de détermination de sûreté de fichiers informatiques conforme à la revendication 1.

Suivant d'autres aspects avantageux de l'invention, le procédé comprend une ou plusieurs des caractéristiques des revendications 2 à 9.

La présente invention a également pour objet un module de détermination de sûreté de fichiers informatiques conforme à la revendication 10.

La présente invention a également pour objet un procédé de construction d'une unité de contrôle conforme à la revendication 11.

La présente invention a également pour objet un produit programme d'ordinateur comportant des instructions logicielles qui, lorsqu'elles sont mises en oeuvre par un ordinateur, mettent en oeuvre ce procédé.

L'invention sera mieux comprise à la lecture de la description qui va suivre, donnée uniquement à titre d'exemple, et faite en se référant aux dessins annexés, sur lesquels :
- la figure 1 est une vue schématique d'un terminal informatique comprenant un module de détermination de sûreté de fichiers informatiques selon l'invention ;
- la figure 2 est vue schématique détaillée du module de détermination de la figure 1 ;
- la figure 3 est une vue schématique d'un automate fini mis en oeuvre par le module de la figure 2 ;
- la figure 4 est un organigramme d'une phase d'apprentissage d'un procédé de mise en oeuvre d'un algorithme de détermination de sûreté de fichiers informatiques selon l'invention ; et
- la figure 5 est un organigramme d'une phase de contrôle du procédé selon l'invention.

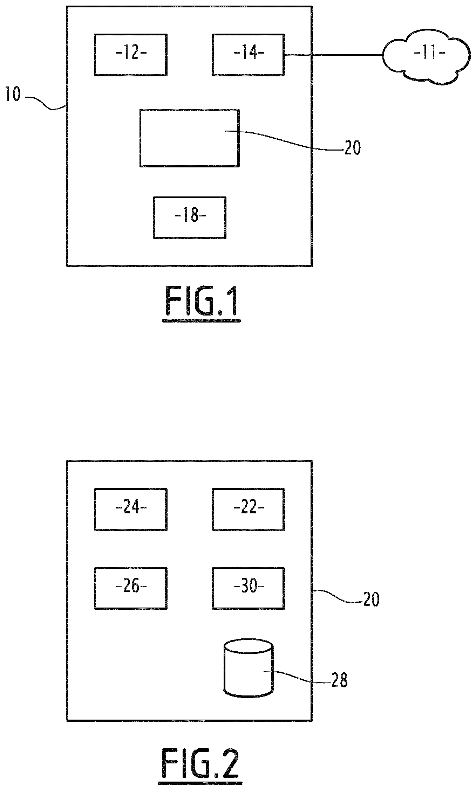

Le terminal informatique 10 de la figure 1 est par exemple un ordinateur raccordé à un réseau informatique 11 et apte à échanger de données informatiques et notamment de fichiers informatiques avec ce réseau 11.

Le réseau 11 est par exemple Internet ou tout autre réseau global ou local.

En référence à la figure 1, le terminal 10 comprend une unité 12 de calcul tel qu'un processeur, une unité 14 de raccordement au réseau 11, une unité 18 de mémorisation et un module 20 de détermination de sûreté de fichiers informatiques selon l'invention.

L'unité de mémorisation 18 est apte à mémoriser des données informatiques formant des fichiers informatiques.

Chaque fichier informatique correspond à une suite de bits prenant les valeurs « 0 » ou « 1 » dans l'unité de mémorisation 18. Cette suite est regroupée sous la forme d'octets présentant une sous-suite de longueur égale à 8 bits. Une telle représentation du fichier informatique dans l'unité de mémorisation 18 est désignée dans la suite par le terme « représentation binaire ».

Au moins certains de fichiers informatiques forment un système d'exploitation apte à communiquer avec l'unité de calcul 12 et l'unité de raccordement 14, et comprenant plus particulièrement une pluralité de logiciels.

Chaque logiciel comprend ainsi un code informatique comportant des instructions destinées à l'unité de calcul 12 et/ou à un autre logiciel et/ou à toute autre composante du terminal 10. Ces instructions permettent d'effectuer des tâches associées au logiciel par un utilisateur ou d'autres logiciels ou composante du terminal 10

On comprend par exécution d'un logiciel, la mise en oeuvre des instructions correspondant au code informatique de ce logiciel par l'unité de calcul 12 et/ou par un autre logiciel et/ou par toute autre composante du terminal 10.

Chaque logiciel est apte à manipuler au moins certains des fichiers informatiques pour effectuer les tâches associées.

Pour ce faire, un tel logiciel est apte à interpréter le contenu du fichier informatique correspondant en analysant la suite de bits formant ce fichier. Une telle interprétation est désignée dans la suite par le terme « ouverture ».

Lorsqu'un fichier est associé à un logiciel, l'ouverture d'un tel fichier signifie l'exécution du logiciel associé.

Le module 20 de détermination de sûreté de fichiers informatiques permet de détecter des fichiers informatiques sains FS et des fichiers informatiques infectés FI par un logiciel malveillant. Ces fichiers informatiques à contrôler sont par exemple issus de l'unité de mémorisation 18 ou du réseau 11.

On comprend par logiciel malveillant, tout logiciel exécutable par l'unité de calcul 12 ou par d'autres logiciels de l'unité de mémorisation 18 sans consentement de l'utilisateur et apte à nuire au système d'exploitation et/ou aux données informatiques mémorisées dans l'unité de mémorisation 18, ou plus généralement, à endommager le fonctionnement du terminal 10.

Un fichier informatique est infecté par un logiciel malveillant lorsque l'exécution ou l'ouverture du fichier est apte à mener à l'exécution du logiciel malveillant.

Un fichier informatique est sain lorsqu'il ne contient aucun logiciel malveillant.

Le module de détermination 20 est réalisé sous la fourme d'un logiciel mémorisé dans l'unité 18.

Selon un autre exemple de réalisation, le module de détermination 20 est réalisé sous la forme d'une composante électronique indépendante raccordée à l'unité de calcul 12, à l'unité de raccordement 14 et à l'unité de mémorisation 18.

Le module 20 est illustré plus en détail sur la figure 2.

Ainsi, en référence à cette figure 2, le module 20 comprend une unité de contrôle comprenant un logiciel de contrôle 22, une unité d'association comprenant un logiciel d'association 24, une unité de reconnaissance comprenant un logiciel de reconnaissance 26, une base 28 de fichiers d'apprentissage, et une unité d'apprentissage comprenant un logiciel d'apprentissage 30.

Le logiciel de contrôle 22 est apte à recevoir un fichier à contrôler FC issu du réseau 11 ou de l'unité de mémorisation 18 pour déterminer la sûreté de ce fichier comme ceci sera expliqué par la suite.

Le logiciel d'association 24 est apte à associer chaque fichier informatique à un mot formel MF présentant une suite de lettres formelles LF.

Chaque lettre formelle LF est une sous-suite de bits de longueur fixe dans la représentation binaire du fichier informatique. Plus particulièrement, chaque lettre formelle LF est un octet dans la représentation binaire du fichier informatique.

L'ensemble des lettres formelles LF distinctes forme un alphabet formel AF. Ainsi, lorsqu'une lettre formelle LF est un octet, l'alphabet formel AF comprend 256 lettres formelles LF ce qui correspond au nombre maximal de combinaisons distinctes des valeurs binaires dans un octet. Autrement dit, AF={LF₀, LF₁, ..., LF₂₅₅} où LFᵢ désigne une lettre formelle LF distincte.

Ainsi, pour construire un mot formel MF à partir d'un fichier informatique, le logiciel d'association 24 est apte à lire le fichier informatique dans sa représentation binaire octet par octet, et à associer à chaque octet une lettre formelle LF.

Il doit être noté que le logiciel d'association 24 n'est pas apte à interpréter la suite de bits dans la représentation binaire du fichier correspondant. Il n'est donc pas apte à exécuter ou à ouvrir ce fichier.

Le logiciel de reconnaissance 26 est apte à reconnaitre l'appartenance d'un mot formel MF construit par le logiciel d'association 24 à un langage régulier LR construit sur l'alphabet formel AF.

On comprend par langage régulier LR, un sous-ensemble de mots formels MF dans l'ensemble de tous les mots formels MF sur l'alphabet formel AF.

Chaque langage régulier LR est apte à s'écrire sous la forme d'une expression régulière ER définissant de manière simple le sous-ensemble de mots formels MF correspondant à ce langage régulier LR.

Ainsi, par exemple, l'expression régulière ER=(L₁L₂)* où le symbole * désigne une répétition zéro, une ou plusieurs fois de l'expression entre (...), définit un langage régulier LR comportant les mots formels MF : Ø, L₁L₂, L₁L₂L₁L₂, ...

Pour reconnaitre l'appartenance d'un mot formel MF à un langage régulier LR, le logiciel de reconnaissance 26 est apte à construire un automate fini déterministe à partir d'une expression régulière ER correspondant à ce langage régulier LR.

Chaque automate fini déterministe comprend une pluralité d'états E comportant un état initial EI et au moins un état acceptable EA, et une pluralité d'arêtes A définissant des conditions de passage d'un état E à un autre. Cette condition de passage est déterministe, c'est-à-dire qu'il existe un seul état E vers lequel la condition renvoie à partir d'un état E donné.

Chaque condition de passage correspond à une règle de transition du langage régulier LR correspondant. Chaque condition est par exemple définie par une lettre formelle LF de l'alphabet formel AF acceptable par le langage régulier LR pour passer entre les états E correspondants.

Chaque mot formel MF est reconnu par le langage régulier LR, lorsqu'en partant de l'état initial EI de l'automate fini correspondant à ce langage régulier LR, il est possible d'arriver vers un état acceptable EA en considérant de manière consécutive chaque lettre formel LF du mot formel MF selon les conditions de passages définies entre les états E.

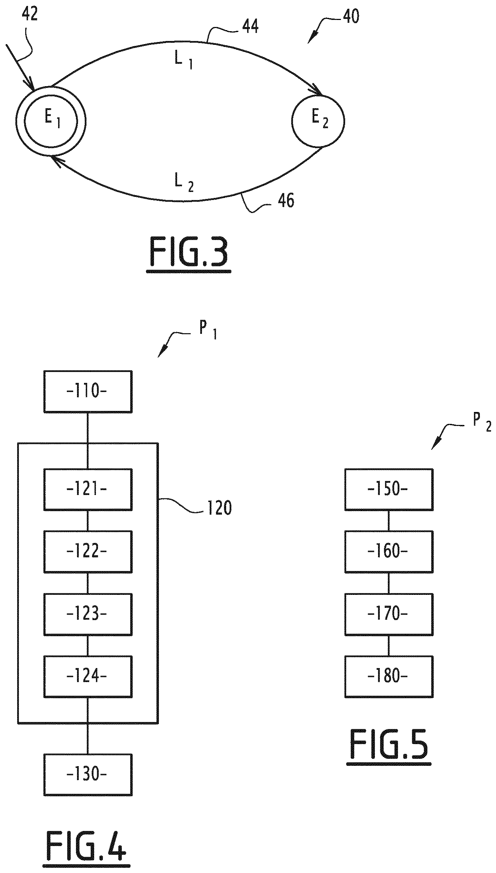

Un exemple d'un automate fini déterministe construit pour un langage régulier LR défini par l'expression régulier ER=(L₁L₂)* est illustré sur la figure 3.

Ainsi, en référence à cette figure 3, l'automate fini déterministe 40 comprend deux états E₁ et E₂. L'état E₁ est à la fois un état initial EI (marqué par la flèche 42) et un état acceptable EA (marqué par un deuxième cercle).

L'automate fini déterministe 40 comprend en outre une arête 44 avec la condition de passage de l'état E₁ vers l'état E₂ déterminée par la lettre L₁, et une arête 46 avec la condition de passage de l'état E₂ vers l'état E₁ déterminée par la lettre L₂.

L'automate 40 permet donc de reconnaitre les mots formels MF : Ø, L₁L₂, L₁L₂L₁L₂, ...

Il est à noter qu'il est possible de construire plusieurs automates finis déterministes différents pour la même expression régulière ER.

La base de fichiers d'apprentissage 28 comprend une pluralité de fichiers informatiques dont la sûreté est connue. Ainsi, cette base 28 comprend une liste de sûreté des fichiers indiquant des fichiers d'apprentissage sains et des fichiers d'apprentissage infectés.

Finalement, le logiciel d'apprentissage 30 est apte à générer des langages réguliers LR de contrôle à partir des fichiers d'apprentissage et à les fournir au logiciel de contrôle 24 pour déterminer la sûreté du fichier informatique à contrôler comme ceci sera expliqué par la suite.

Le procédé 100 de mise en oeuvre d'un algorithme de détermination de sûreté de fichiers informatiques selon l'invention va désormais être décrit à l'aide des figures 4 et 5 illustrant des organigrammes respectivement d'une phase d'apprentissage P₁ et d'une phase de contrôle P₂ de ce procédé 100.

La phase de contrôle P₂ est mise en oeuvre notamment par le logiciel de contrôle 22 et permet de déterminer la sûreté d'un fichier informatique à contrôler en associant ce fichier à un mot formel MF et en analysant la reconnaissance de ce mot MF par un groupe de langages régulières LR de contrôle générés lors de la phase d'apprentissage P₁. Ce groupe de langages réguliers LR forme un individu de contrôle.

La phase d'apprentissage P₁ est mise en oeuvre notamment par le logiciel d'apprentissage 30 et permet de générer un individu de contrôle le mieux adapté pour déterminer la sûreté du fichier informatique à contrôler à partir des fichiers d'apprentissage de la base 28. Il s'agit donc d'un algorithme génétique permettant de choisir l'individu de contrôle IC parmi une pluralité d'individus I en analysant leur capacité de déterminer la sûreté des fichiers d'apprentissage.

La phase d'apprentissage P₁ est ainsi apte à être lancée au moins une fois avant un premier lancement de la phase de contrôle P₂.

En référence à la figure 4, lors de l'étape initiale 110 de la phase d'apprentissage P₂, le logiciel d'apprentissage 30 génère aléatoirement une pluralité de langages réguliers LR sur l'alphabet formel AF.

Plus particulièrement, la génération des langages réguliers LR comprend la génération aléatoire des expressions régulières ER associées à ces langages. Le nombre total de langages réguliers LR générés est compris par exemple entre 1 000 et 10 000.

Lors de la même étape, le logiciel d'apprentissage 30 associe chaque langage régulier LR généré à un individu I. Ainsi, chaque individu I est un sous-ensemble de l'ensemble des langages réguliers LR générés.

L'ensemble des individus I forme une population P. Chaque individu a par exemple un nombre fixe des langages réguliers LR associés qui est égal par exemple à 13.

Lors de l'étape 120 suivante, le logiciel d'apprentissage 30 fait évoluer la population P pour adapter chacun des individus I à la reconnaissance des fichiers sains ou des fichiers infectés.

Ainsi, lors de la sous-étape 121, le logiciel d'apprentissage 30 évalue chaque individu I de la population P en associant à cet individu un indicateur de santé IS.

Cet indicateur de santé IS caractérise l'aptitude de l'individu correspondant à déterminer la sûreté des fichiers d'apprentissage en utilisant les langues réguliers LR qui lui sont associés.

Pour ce faire, le logiciel d'apprentissage 30 fait appel au logiciel d'association 24 pour associer à chacun des fichiers d'apprentissage issus de la base 28 un mot formel MF.

Puis, pour chaque individu I et pour chaque langage régulier LR associé à cet individu I, le logiciel d'apprentissage 30 fait appel au logiciel de reconnaissance 26 pour déterminer la reconnaissance de chacun des mots formels MF par ce langage régulier LR.

Puis, le logiciel d'apprentissage 30 calcule un premier ensemble d'éléments Xₖ dans lequel chaque élément Xₖ est associé à un nombre k variant entre 0 et le nombre total des langages réguliers LR associés à l'individu I incrémenté d'un.

Chaque élément Xₖ correspondant au nombre k, est égal au rapport du nombre de mots formels MF associées aux fichiers d'apprentissage sains et étant reconnus par au moins k langages réguliers LR associés à l'individu I, sur le nombre total des fichiers d'apprentissage sains de la base 28.

De manière analogue, le logiciel d'apprentissage 30 calcule un deuxième ensemble d'éléments Yₖ dans lequel chaque élément Yₖ est associé à un nombre k variant entre 0 et le nombre total des langages réguliers LR associés à l'individu I incrémenté d'un.

Chaque élément Yₖ correspondant au nombre k, est égal au rapport du nombre de mots formels MF associées aux fichiers d'apprentissage infectés et étant reconnus par au moins k langages réguliers LR associés à l'individu I, sur le nombre total des fichiers d'apprentissage infectés de la base 28.

Selon un exemple de réalisation, l'indicateur de santé IS de l'individu I est égal à l'aire d'une courbe ROC (de l'anglais « Receiver Operating Characteristic ») construite sur les points dont les abscisses X et les ordonnées Y correspondent respectivement aux éléments Xₖ et Yₖ des premier et deuxième ensembles d'éléments.

Selon un autre exemple de réalisation, l'indicateur de santé IS est égal à la moyenne de ladite aire et d'un indicateur additionnel. Cet indicateur additionnel est mesuré par la proportion maximale de fichiers d'apprentissage (sains et infectés) tel qu'il existe un nombre p de langages réguliers LR associés à l'individu I tels que au plus p langages détectent les mots formels MF associés aux fichiers infectés, et au moins p+r détectent les mots formels MF associés aux fichiers sains. Le nombre r est un paramètre prédéterminé et le nombre p a la valeur maximale possible selon la condition précitée.

Lors de la sous-étape 122 suivante, le logiciel d'apprentissage 30 crée un nouvel individu I pour au moins certaines paires d'individus I de la population P. Chaque individu I de cette paire d'individus est alors appelé individu parent pour l'individu enfant nouvellement créé.

Les paires d'individus parents sont choisies en fonction de leur indicateur de santé IS. Ainsi, par exemple, seuls individus ayant leur indicateur de santé IS supérieur à un seuil prédéterminé, sont aptes à être choisis pour former une paire d'individus parents.

Chaque individu enfant est associé à une pluralité de langages réguliers LR dont chaque langage régulier LR a été pris aléatoirement de l'un des individus parents correspondants.

Lors de la sous-étape 123 suivante, le logiciel d'apprentissage 30 modifie aléatoirement une partie d'au moins certains langages réguliers LR de certains des individus I de la population P.

Cette sous-étape correspond donc à une mutation aléatoire de la population P.

Lors de la sous-étape 124 suivante, le logiciel d'apprentissage 30 supprime des individus I moins adaptés. Les individus supprimés correspondent par exemple aux individus I de la population P dont l'indicateur de santé est inférieur à un premier seuil. Ce premier seuil est par exemple un paramètre de l'étape 120 qui dépend par exemple du nombre des individus I dans la population P, du nombre d'itération de l'étape 120, etc.

L'étape d'évolution 120 de la population P est répétée un nombre de fois prédéterminé.

Selon un exemple de réalisation, l'étape d'évolution est répétée jusqu'à ce que la moyenne des indicateurs de santé de toute la population P ne devienne supérieure à un deuxième seuil prédéterminé.

Lors de l'étape 130 suivante, le logiciel d'apprentissage sélectionne l'individu le plus adapté dans la population P. Cet individu correspond par exemple à l'individu I de la population P ayant l'indicateur de santé IS le plus élevé dans la population P.

En référence à la figure 5, lors de l'étape initiale 150 de la phase de contrôle P₂, le logiciel de contrôle 22 reçoit un fichier informatique à contrôler FC et un individu de contrôle IC correspondant à l'individu sélectionné par le logiciel d'apprentissage 30 lors de l'étape 130.

Lors de l'étape 160 suivante, le logiciel de contrôle 22 fait appel au logiciel d'association 24 pour associer un mot formel à contrôler MFC au fichier à contrôler FC.

Lors de l'étape 170 suivante, le logiciel de contrôle 22 fait appel au logiciel de reconnaissance 26 pour déterminer le nombre de langages réguliers LR associés à l'individu de contrôle IC ayant reconnu le mot formel à contrôler MFC.

Finalement, lors de l'étape 180 suivante, le logiciel de contrôle 22 analyse ce nombre pour en déduire la sûreté du fichier à contrôler FC. Ainsi, par exemple, lorsque ce nombre est supérieur à la valeur p+r/2 où les nombres p et r correspondent aux nombres p et r dans le calcul de l'indicateur additionnel pour l'individu de contrôle IC indiqué précédemment. On conçoit alors que la présente invention comporte un certain nombre d'avantages.

Le procédé selon l'invention met en oeuvre un algorithme génétique apte à apprendre lui-même de déterminer la sûreté des fichiers. Ceci permet alors de détecter des fichiers infectés par un logiciel malveillant dont la signature n'est pas connue mais comporte un certain nombre de similarités avec des signatures connues.

La division du procédé en deux phases permet de lancer la phase de contrôle P₂ indépendamment de la phase d'apprentissage P₁ après que celle-ci a été lancée au moins une fois.

De plus, il est possible de mettre à jour la base de fichiers d'apprentissage 28 et de lancer à nouveau la phase d'apprentissage pour améliorer l'adaptation de l'individu de contrôle IC.

La phase de contrôle P₂ est effectuée sans ouverture ou exécution du fichier à contrôler ce qui permet d'éviter l'exécution du logiciel malveillant.

La mise en oeuvre du procédé selon l'invention a été illustrée en utilisant le formalisme des automates finis déterministes rendant la réalisation du procédé particulièrement simple. Toutefois, il est à noter qu'il possible d'utiliser d'autres techniques de réalisation connues dans l'état de la technique comme par exemple les grammaires contextuelles.

## Revendications

1. Procédé (100) de mise en oeuvre d'un algorithme de détermination de sûreté de fichiers informatiques pour détecter des fichiers sains et des fichiers infectés par un logiciel malveillant, la sûreté d'un fichier à contrôler (FC) étant déterminée par une analyse de reconnaissance d'un mot formel à contrôler (MFC) associé à ce fichier (FC), par chaque langage régulier (LR) d'un groupe de langages réguliers (LR), dit individu de contrôle (IC), chaque langage régulier (LR) de l'individu de contrôle (IC) étant construit sur un alphabet formel (AF), l'alphabet formel (AF) comportant une pluralité de lettres formelles (LF) aptes à former des mots formels (MF) d'un ou plusieurs langages réguliers (LR) ;
le procédé (100) comprenant une phase d'apprentissage (P₁) de l'individu de contrôle (IC) et une phase de contrôle (P₂) d'un fichier à contrôler (FC) par l'individu de contrôle (IC),
la phase de contrôle (P₂) comportant les étapes suivantes :
- fourniture (150) de l'individu de contrôle (IC) développé lors de la phase d'apprentissage (P₁) ;
- association (160) du fichier à contrôler (FC) à un mot formel à contrôler (MFC) construit sur l'alphabet formel (AF) ;
- détermination (170) de la reconnaissance du mot formel à contrôler (MFC) par chaque langage régulier (LR) de l'individu de contrôle (IC) ;
- détermination (180) de la sûreté du fichier à contrôler (FC) en fonction du nombre des langages réguliers (LR) de l'individu de contrôle (IC) ayant reconnu le mot formel à contrôler (MFC) associé et le nombre des langages réguliers (LR) de l'individu de contrôle (IC) ne l'ayant pas reconnu ;
la phase d'apprentissage (P₁) comportant les étapes suivantes :
- fourniture d'une base de fichiers (28) comprenant une pluralité de fichiers d'apprentissage dont la sûreté est connue, et association des mots formels (MF) à chacun de ces fichiers ;
- génération (110) des individus (I) en associant à chacun d'entre eux un groupe de langages réguliers (LR), l'ensemble des individus (I) formant une population (P), chaque individu (I) étant associé à un indicateur de santé (IS) caractérisant son aptitude à déterminer la sûreté des fichiers d'apprentissage en utilisant la reconnaissance des mots formels (MF) associés à ces fichiers par les langues réguliers (LR) de cet individu (I) ;
- évolution (120) de la population (P) comprenant une création (122) d'un nouvel individu (I) à partir de deux individus (I) parents, chaque nouvel individu (I) comportant une combinaison de langages réguliers (LR) associés à ses parents, et une suppression (124) d'individus (I) ayant les indicateurs de santé (IS) inférieurs à un seuil prédéterminé pour cette étape (120) ;
- sélection (130) d'un individu de contrôle (IC) correspondant à l'individu ayant le meilleur indicateur de santé (IS) dans toute la population (P) ;
l'indicateur de santé (IS) de chaque individu (I) étant une fonction du nombre des langages réguliers (LR) de cet individu (I), aptes à reconnaitre des mots formels (MF) associés à chacun des fichiers d'apprentissage.

2. Procédé (100) selon la revendication 1, dans lequel chacun des langages réguliers (LR) de chaque individu (I) est apte à reconnaitre des mots formels (MF) associés à des fichiers infectés par un logiciel malveillant.

3. Procédé (100) selon la revendication 1, dans lequel chacun des langages réguliers (LR) de chaque individu (I) est apte à reconnaitre des mots formels (MF) associés à des fichiers sains.

4. Procédé (100) selon l'une quelconque des revendications précédentes, dans lequel chaque lettre formelle (LF) de l'alphabet formel (AF) est une suite ordonnée de bits de longueur fixée.

5. Procédé (100) selon la revendication 4, dans lequel ladite suite ordonnée comprend huit bits et forme un octet.

6. Procédé (100) selon la revendication 4 ou 5, dans lequel chaque mot formel (MF) associé à un fichier informatique est une suite ordonnée de lettres formelles (LF) dans la représentation binaire de ce fichier informatique.

7. Procédé (100) selon l'une quelconque des revendications précédentes, dans lequel lors de l'étape de génération (110) d'individus (I), les langages réguliers (LR) destinés à être associés à ces individus (I), sont générés de manière aléatoire.

8. Procédé (100) selon l'une quelconque des revendications précédentes, dans lequel l'étape d'évolution (120) de la population (P) comprend en outre une mutation (123) d'individus consistant à une modification aléatoire d'une partie d'au moins certains langages réguliers (LR) de ces individus (I).

9. Procédé (100) selon l'une quelconque des revendications précédentes, dans lequel la détermination de la reconnaissance d'un mot formel (MF) par un langage régulier (LR) est mise en oeuvre en utilisant un automate fini déterministe (40) comprenant une pluralité d'états (E) comportant un état initial (EI) et au moins un état acceptable (EA), et une pluralité d'arêtes (44, 46) définissant des conditions de passage d'un état (E) à un autre ;
chaque condition de passage étant définie par une lettre formelle (LF) de l'alphabet formel (AF) acceptable par le langage régulier (LR) correspondant pour passer entre les états (E) correspondants ;
chaque mot formel (MF) étant reconnu par un langage régulier (LR) lorsqu'en partant de l'état initial (EI) d'un automate fini déterministe (40) correspondant à ce langage régulier (LR), il est possible d'arriver vers l'au moins un état acceptable (EA) de cet automate (40) en considérant de manière consécutive chaque lettre formelle (LF) du mot formel (MF) selon les conditions de passages définies entre les états (E) de cet automate (40).

10. Module (20) de détermination de sureté de fichiers informatiques pour détecter des fichiers sains et des fichiers infectés par un logiciel malveillant, la sûreté d'un fichier à contrôler (FC) étant déterminée par une analyse de reconnaissance d'un mot formel à contrôler (MFC) associé à ce fichier (FC), par chaque langage régulier (LR) d'un groupe de langages réguliers (LR), dit individu de contrôle (IC), chaque langage régulier (LR) de l'individu de contrôle (IC) étant construit sur un alphabet formel (AF), l'alphabet formel (AF) comportant une pluralité de lettres formelles (LF) aptes à former des mots formels (MF) d'un ou plusieurs langages réguliers (LR) ;
le module (20) étant apte :
- à fournir une base de fichiers (28) comprenant une pluralité de fichiers d'apprentissage dont la sûreté est connue, et à associer des mots formels (MF) à chacun de ces fichiers ;
- à générer des individus (I) en associant à chacun d'entre eux un groupe de langages réguliers (LR), l'ensemble des individus (I) formant une population (P), chaque individu (I) étant associé à un indicateur de santé (IS) caractérisant son aptitude à déterminer la sûreté des fichiers d'apprentissage en utilisant la reconnaissance des mots formels (MF) associés à ces fichiers par les langues réguliers (LR) de cet individu (I) ;
- à faire évoluer la population (P) en créant un nouvel individu (I) à partir de deux individus (I) parents, chaque nouvel individu (I) comportant une combinaison de langages réguliers (LR) associés à ses parents, et en supprimant des individus (I) ayant les indicateurs de santé (IS) inférieurs à un seuil prédéterminé ;
- à sélectionner un individu de contrôle (IC) correspondant à l'individu ayant le meilleur indicateur de santé (IS) dans toute la population (P) ;
- à associer le fichier à contrôler (FC) à un mot formel à contrôler (MFC) construit sur l'alphabet formel (AF) ;
- à déterminer la reconnaissance du mot formel à contrôler (MFC) par chaque langage régulier (LR) de l'individu de contrôle (IC) ;
- à déterminer la sûreté du fichier à contrôler (FC) en fonction du nombre des langages réguliers (LR) de l'individu de contrôle (IC) ayant reconnu le mot formel à contrôler (MFC) associé et le nombre des langages réguliers (LR) de l'individu de contrôle (IC) ne l'ayant pas reconnu ;
l'indicateur de santé (IS) de chaque individu (I) étant une fonction du nombre des langages réguliers (LR) de cet individu (I), aptes à reconnaitre des mots formels (MF) associés à chacun des fichiers d'apprentissage.

11. Procédé de construction d'une unité de contrôle (22) permettant de mettre en oeuvre un algorithme de détermination de sûreté de fichiers informatiques pour détecter des fichiers sains et des fichiers infectés par un logiciel malveillant, la sûreté d'un fichier à contrôler (FC) étant déterminée par une analyse de reconnaissance d'un mot formel à contrôler (MFC) associé à ce fichier (FC), par chaque langage régulier (LR) d'un groupe de langages réguliers (LR), dit individu de contrôle (IC), chaque langage régulier (LR) de l'individu de contrôle (IC) étant construit sur un alphabet formel (AF), l'alphabet formel (AF) comportant une pluralité de lettres formelles (LF) aptes à former des mots formels (MF) d'un ou plusieurs langages réguliers (LR) ;
le procédé comprenant une phase d'apprentissage (P₁) de l'individu de contrôle (IC) comportant les étapes suivantes :
- fourniture d'une base de fichiers (28) comprenant une pluralité de fichiers d'apprentissage dont la sûreté est connue, et association des mots formels (MF) à chacun de ces fichiers ;
- génération (110) des individus (I) en associant à chacun d'entre eux un groupe de langages réguliers (LR), l'ensemble des individus (I) formant une population (P), chaque individu (I) étant associé à un indicateur de santé (IS) caractérisant son aptitude à déterminer la sûreté des fichiers d'apprentissage en utilisant la reconnaissance des mots formels (MF) associés à ces fichiers par les langues réguliers (LR) de cet individu (I) ;
- évolution (120) de la population (P) comprenant une création (122) d'un nouvel individu (I) à partir de deux individus (I) parents, chaque nouvel individu (I) comportant une combinaison de langages réguliers (LR) associés à ses parents, et une suppression (124) d'individus (I) ayant les indicateurs de santé (IS) inférieurs à un seuil prédéterminé pour cette étape (120) ;
- sélection (130) d'un individu de contrôle (IC) correspondant à l'individu ayant le meilleur indicateur de santé (IS) dans toute la population (P) ;
- fourniture (150) de l'individu de contrôle (IC) sélectionné pour mettre en oeuvre l'unité de contrôle (22) ;
l'indicateur de santé (IS) de chaque individu (I) étant une fonction du nombre des langages réguliers (LR) de cet individu (I), aptes à reconnaitre des mots formels (MF) associés à chacun des fichiers d'apprentissage.

12. Produit programme d'ordinateur comportant des instructions logicielles qui, lorsqu'elles sont mises en oeuvre par un ordinateur, mettent en oeuvre le procédé selon la revendication 11.

## Patentansprüche

1. Verfahren (100) zum Ausführen eines Algorithmus zur Sicherheitsbestimmung von Dateien, um gesunde und durch ein Schadprogramm infizierte Dateien zu erkennen, wobei die Sicherheit einer zu prüfenden Datei (FC) durch eine Analyse zum Erkennen eines zu prüfenden formalen Wortes (MFC), das mit dieser Datei (FC) verknüpft ist, durch jede reguläre Sprache (LR) aus einer Gruppe von regulären Sprachen (LR) bestimmt wird, wobei besagtes Kontrollindividuum (IC), jede reguläre Sprache (LR) auf einem formalen Alphabet (AF) aufgebaut ist, wobei das formale Alphabet (AF) eine Vielzahl von formalen Buchstaben (LF) umfasst, die geeignet sind, formale Wörter (MF) von einer oder mehreren regulären Sprachen (LR) zu bilden;
wobei das Verfahren (100) eine Lernphase (P₁) des Kontrollindividuums (IC) und eine Kontrollphase (P₂) einer durch das Kontrollindividuum (IC) zu prüfenden Datei (FC) umfasst,
wobei die Kontrollphase (P₂) die folgenden Schritte enthält:
- Lieferung (150) des Kontrollindividuums (IC), das während der Lernphase (P₁) entwickelt wurde;
- Verknüpfung (160) der zu prüfenden Datei (FC) mit einem zu prüfenden formalen Wort (MFC), das auf einem formalen Alphabet (AF) aufgebaut ist;
- Festlegung (170) des Erkennens des zu prüfenden formalen Wortes (MFC) durch jede reguläre Sprache (LR) des Kontrollindividuums (IC);
- Festlegung (180) der Sicherheit der zu prüfenden Datei (FC) in Abhängigkeit von der Anzahl der regulären Sprachen (LR) des Kontrollindividuums (IC), die das zu kontrollierende formale Wort (MFC) erkannt haben, und die Anzahl der regulären Sprachen (LR) des Kontrollindividuums (IC), die es nicht erkannt haben;
wobei die Lernphase (P₁) die folgenden Schritte enthält:
- Lieferung einer Datenbank (28), die eine Vielzahl von Lerndateien, deren Sicherheit bekannt ist, umfasst, und Verknüpfung der formalen Wörter (MF) mit jeder dieser Dateien;
- Erzeugung (110) der Individuen (I), unter Verknüpfung jedes von ihnen mit einer Gruppe von regulären Sprachen (LR), wobei die Gesamtheit der Individuen (I) eine Population (P) bildet, wobei jedes Individuum (I) mit einem Gesundheitsindikator (IS) verknüpft ist, der seine Fähigkeit charakterisiert, die Sicherheit der Lerndateien unter Verwendung des Erkennens der mit diesen Dateien verknüpften formalen Wörter (MF) durch die regulären Sprachen (LR) dieses Individuums (I) zu bestimmen;
- Entwicklung (120) der Population (P), umfassend eine Erschaffung (122) eines neuen Individuums (I) anhand von zwei Eltern-Individuen (I), wobei jedes neue Individuum (I) eine Kombination aus mit seinen Eltern verknüpften regulären Sprachen (LR) umfasst, und ein Entfernen (124) von Individuen (I), die Gesundheitsindikatoren (IS) haben, die unterhalb einer für diesen Schritt (120) vorher festgelegten Grenze liegen;
- Auswahl (130) eines Kontrollindividuums (IC), das dem Individuum entspricht, das den besten Gesundheitsindikator (IS) in der gesamten Population (P) hat; wobei der Gesundheitsindikator (IS) jedes Individuums (I) eine Funktion der Anzahl der regulären Sprachen (LR) dieses Individuums (I) ist, die geeignet sind, formale Wörter (MF) zu erkennen, die mit jeder der Lerndateien verknüpft sind.

2. Verfahren (100) nach Anspruch 1, in welchem jede der regulären Sprachen (LR) jedes Individuums (I) geeignet ist, formale Wörter (MF) zu erkennen, die mit Dateien verknüpft sind, die durch ein Schadprogramm infiziert wurden.

3. Verfahren (100) nach Anspruch 1, in welchem jede der regulären Sprachen (LR) jedes Individuums (I) geeignet ist, formale Wörter (MF) zu erkennen, die mit gesunden Dateien verknüpft sind.

4. Verfahren (100) nach einem der vorstehenden Ansprüche, in welchem jeder formale Buchstabe (LF) des formalen Alphabets (AF) eine geordnete Folge von Bits von festgelegter Länge ist.

5. Verfahren (100) nach Anspruch 4, in welchem die besagte geordnete Folge acht Bits enthält und ein Byte bildet.

6. Verfahren (100) nach Anspruch 4 oder 5, in welchem jedes formale Wort (MF), das mit einer Datei verknüpft ist, eine geordnete Folge von formalen Buchstaben (LF) in der binären Darstellung dieser Datei ist.

7. Verfahren (100) nach einem der vorstehenden Ansprüche, in welchem während des Schritts zur Erzeugung (110) von Individuen (I) die regulären Sprachen (LR), die dazu bestimmt sind, mit diesen Individuen (I) verknüpft zu werden, auf zufällige Weise erzeugt werden.

8. Verfahren (100) nach einem der vorstehenden Ansprüche, in welchem der Schritt zur Entwicklung (120) der Population (P) des Weiteren eine Mutation (123) von Individuen umfasst, die in einer zufälligen Modifikation eines Teils von mindestens bestimmten regulären Sprachen (LR) dieser Individuen (I) besteht.

9. Verfahren (100) nach einem der vorstehenden Ansprüche, in welchem die Festlegung des Erkennens eines formalen Wortes (MF) durch eine reguläre Sprache (LR) erfolgt, indem ein deterministischer endlicher Automat (40) verwendet wird, der eine Vielzahl von Zuständen (E) umfasst, die einen Anfangszustand (EI) und mindestens einen annehmbaren Zustand (EA) beinhalten, und eine Vielzahl von Kanten (40, 46), die die Bedingungen des Übergangs von einem Zustand (E) in einen anderen festlegen;
wobei jede Übergangsbedingung festgelegt wird durch einen formalen Buchstaben (LF) des formalen Alphabets (AF), annehmbar durch die jeweilige reguläre Sprache (LR), um zwischen den jeweiligen Zuständen (E) überzugehen;
wobei jedes formale Wort (MF) durch eine reguläre Sprache (LR) erkannt wird, wenn es ausgehend vom Anfangszustand (EI) eines deterministischen endlichen Automaten (40), der dieser regulären Sprache (LR) entspricht, möglich ist, mindestens einen annehmbaren Zustand (EA) dieses Automaten (40) zu erreichen, unter fortlaufender Berücksichtigung jedes formalen Buchstabens (LF) des formalen Wortes (MF) entsprechend den zwischen den Zuständen (E) dieses Automaten (40) festgelegten Übergangsbedingungen.

10. Modul (20) zur Sicherheitsbestimmung von Dateien, um gesunde Dateien und durch ein Schadprogramm infizierte Dateien zu erkennen, wobei die Sicherheit einer zu prüfenden Datei (FC) durch eine Analyse zum Erkennen eines zu prüfenden formalen Wortes (MFC), das mit dieser Datei (FC) verknüpft ist, durch jede reguläre Sprache (LR) aus einer Gruppe von regulären Sprachen (LR) bestimmt wird, wobei besagtes Kontrollindividuum (IC), jede reguläre Sprache (LR) des Kontrollindividuums (IC) auf einem formalen Alphabet (AF) aufgebaut ist, wobei das formale Alphabet (AF) eine Vielzahl von formalen Buchstaben (LF) umfasst, die geeignet sind, formale Wörter (MF) von einer oder mehreren regulären Sprachen (LR) zu bilden;
wobei das Modul (20) geeignet ist:
- eine Datenbank (28) zu liefern, die eine Vielzahl von Lerndateien umfasst, deren Sicherheit bekannt ist, und formale Wörter (MF) mit jeder dieser Dateien zu verknüpfen;
- Individuen (I) zu erzeugen, unter Verknüpfung jedes von ihnen mit einer Gruppe von regulären Sprachen (LR), wobei die Gesamtheit der Individuen (I) eine Population (P) bildet, wobei jedes Individuum (I) mit einem Gesundheitsindikator (IS) verknüpft ist, der seine Fähigkeit charakterisiert, die Sicherheit der Lerndateien unter Verwendung des Erkennens der mit diesen Dateien verknüpften formalen Wörter (MF) durch die regulären Sprachen (LR) dieses Individuums (I) zu bestimmen;
- die Population (P) wachsen zu lassen, durch Schaffung eines neuen Individuums (I) anhand von zwei Eltern-Individuen (I), wobei jedes neue Individuum (I) eine Kombination aus mit seinen Eltern verknüpften regulären Sprachen (LR) umfasst, und durch Entfernen der Individuen (I), die Gesundheitsindikatoren (IS) haben, die unterhalb einer vorher festgelegten Grenze liegen;
- ein Kontrollindividuum (IC) auszuwählen, das dem Individuum entspricht, das den besten Gesundheitsindikator (IS) in der gesamten Population (P) hat;
- die zu prüfende Datei (FC) mit einem zu prüfenden formalen Wort (MFC), das auf dem formalen Alphabet (AF) aufgebaut ist, zu verknüpfen;
- das Erkennen des zu prüfenden formalen Wortes (MFC) durch jede reguläre Sprache (LR) des Kontrollindividuums (IC) festzulegen;
- die Sicherheit der zu prüfenden Datei (FC) in Abhängigkeit von der Anzahl der regulären Sprachen (LR) des Kontrollindividuums (IC), die das verknüpfte zu prüfende formale Wort (MFC) erkannt haben, zu bestimmen, und die Anzahl der regulären Sprachen (LR) des Kontrollindividuums (IC), die es nicht erkannt haben;
wobei der Gesundheitsindikator (IS) jedes Individuums (I) eine Funktion der Anzahl der regulären Sprachen (LR) dieses Individuums (I) ist, die geeignet sind, mit jeder der Lerndateien verknüpfte formale Wörter (MF) zu erkennen.

11. Verfahren zur Errichtung einer Kontrolleinheit (22), die es ermöglicht, einen Algorithmus zur Sicherheitsbestimmung von Dateien auszuführen, um gesunde Dateien und durch ein Schadprogramm infizierte Dateien zu erkennen, wobei die Sicherheit einer zu prüfenden Datei (FC) durch eine Analyse zum Erkennen eines mit dieser Datei (FC) verknüpften zu prüfenden formalen Wortes (MFC) durch jede reguläre Sprache (LR) einer Gruppe von regulären Sprachen (LR) bestimmt wird, wobei besagtes Kontrollindividuum (IC), jede reguläre Sprache (LR) des Kontrollindividuums (IC) auf einem formalen Alphabet (AF) aufgebaut ist, wobei das formale Alphabet (AF) eine Vielzahl von formalen Buchstaben (LF) umfasst, die geeignet sind, formale Wörter (MF) von einer oder mehreren regulären Sprachen (LR) zu bilden;
wobei das Verfahren eine Lernphase (P₁) des Kontrollindividuums (IC) umfasst, die die folgenden Schritte enthält:
- Lieferung einer Datenbank (28), die eine Vielzahl von Lerndateien umfasst, deren Sicherheit bekannt ist, und Verknüpfung der formalen Wörter (MF) mit jeder dieser Dateien;
- Erzeugung (110) der Individuen (I) unter Verknüpfung jedes von ihnen mit einer Gruppe regulärer Sprachen (LR), wobei die Gesamtheit der Individuen (I) eine Population (P) bildet, wobei jedes Individuum (I) mit einem Gesundheitsindikator (IS) verknüpft ist, der seine Fähigkeit charakterisiert, die Sicherheit der Lerndateien unter Verwendung des Erkennens der mit diesen Dateien verknüpften formalen Wörter (MF) durch die regulären Sprachen (LR) dieses Individuums (I) zu bestimmen;
- Entwicklung (120) der Population (P), umfassend eine Erschaffung (122) eines neuen Individuums (I) anhand von zwei Eltern-Individuen (I), wobei jedes neue Individuum (I) eine Kombination aus mit seinen Eltern verknüpften regulären Sprachen (LR) umfasst, und ein Entfernen (124) von Individuen (I), die Gesundheitsindikatoren (IS) haben, die unterhalb einer für diesen Schritt (120) vorab festgelegten Grenze liegen;
- Auswahl (130) eines Kontrollindividuums (IC), das dem Individuum entspricht, das den besten Gesundheitsindikator (IS) in der gesamten Population (P) hat;
- Lieferung (150) des ausgewählten Kontrollindividuums (IC), um die Kontrolleinheit (22) auszuführen;
wobei der Gesundheitsindikator (IS) jedes Individuums (I) eine Funktion der Anzahl der regulären Sprachen (LR) dieses Individuums (I) ist, die geeignet sind, mit jeder der Lerndateien verknüpfte formale Wörter (MF) zu erkennen.

12. Computerprogrammprodukt, das Softwarebefehle umfasst, die, wenn sie durch einen Computer ausgeführt werden, das Verfahren nach Anspruch 11 ausführen.

## Claims

1. A method (100) for implementing an algorithm for determining computer file security to detect healthy files and files infected with malware, the security of the file to be checked (FC) being determined by a recognition analysis of a formal word to be checked (MFC) associated with that file (FC), by each regular language (LR) of a group of regular languages (LR), called control individual (IC), each regular language (LR) of the control individual (IC) being constructed on a formal alphabet (AF), the formal alphabet (AF) including a plurality of formal letters (LF) able to form formal words (MF) of one or more regular languages (LR);
the method (100) comprising a learning phase (P₁) of the control individual (IC) and a checking phase (P₂) of a file to be checked (FC) by the control individual (IC),
the checking phase (P₂) including the following steps:
- providing (150) the control individual (IC) developed during the learning phase (P₁);
- associating (160) the file to be checked (FC) with a formal word to be checked (MFC) constructed on the formal alphabet (AF);
- determining (170) the recognition of the formal word to be checked (MFC) by each regular language (LR) of the control individual (IC);
- determining (180) the security of the file to be checked (FC) as a function of the number of regular languages (LR) of the control individual (IC) having recognized the associated formal word to be checked (MFC) and the number of regular languages (LR) of the control individual (IC) not having recognized it;
the learning phase (P₁) including the following steps:
- providing a file database (28) comprising a plurality of learning files whose security is known, and associating formal words (MF) with each of these files;
- generating (110) individuals (I) by associating each of them with a group of regular languages (LR), the set of individuals (I) forming a population (P), each individual (I) being associated with a health indicator (IS) characterizing its ability to determine the security of the learning files by using the recognition of the formal words (MF) associated with these files by the regular languages (LR) of that individual (I);
- evolving (120) the population (P) comprising a creation (122) of a new individual (I) from two parent individuals (I), each new individual (I) including a combination of regular languages (LR) associated with its parents, and eliminating (124) individuals (I) having health indicators (IS) below a predetermined threshold for this step (120);
- selecting (130) a control individual (IC) corresponding to the individual having the best health indicator (IS) in the entire population (P);
the health indicator (IS) of each individual (I) being a function of the number of regular languages (LR) of that individual (I), able to recognize formal words (MF) associated with each of the learning files.

2. The method (100) according to claim 1, wherein each of the regular languages (LR) of each individual (I) is able to recognize formal words (MF) associated with files infected by malware.

3. The method (100) according to claim 1, wherein each of the regular languages (LR) of each individual (I) is able to recognize formal words (MF) associated with healthy files.

4. The method (100) according to any one of the preceding claims, wherein each formal letter (LF) of the formal alphabet (AF) is a sequenced series of bits with a fixed length.

5. The method (100) according to claim 4, wherein said sequenced series comprises eight bits and forms a byte.

6. The method (100) according to claim 4 or 5, wherein each formal word (MF) associated with a computer file is a sequenced series of formal letters (LF) in the binary representation of that computer file.

7. The method (100) according to any one of the preceding claims, wherein during the step for generating (110) individuals (I), the regular languages (LR) intended to be associated with these individuals (I) are generated randomly.

8. The method (100) according to any one of the preceding claims, wherein the step for evolution (120) of the population (P) further comprises a mutation (123) of individuals consisting of a random modification of part of at least some of the regular languages (LR) of those individuals (I).

9. The method (100) according to any one of the preceding claims, wherein the determination of the recognition of a formal word (MF) by a regular language (LR) is implemented by using a deterministic finite-state automaton (40) comprising a plurality of states (E) including an initial state (EI) and at least one acceptable state (EA), and a plurality of edges (44, 46) defining conditions for passing from one state (E) to another;
each passage condition being defined by a formal letter (LF) of the formal alphabet (AF) acceptable by the corresponding regular language (LR) to go between corresponding states (E);
each formal word (MF) being recognized by a regular language (LR) when, starting from the initial state (EI) of a deterministic finite-state automaton (40) corresponding to this regular language (LR), it is possible to arrive toward the at least one acceptable state (EA) of this automaton (40) by consecutively considering each formal letter (LF) of the formal word (MF) according to the passage conditions defined between the states (E) of this automaton (40).

10. A module (20) for determining computer file security to detect healthy files and files affected by malware, the security of the file to be checked (FC) being determined through a recognition analysis of a formal word to be checked (MFC) associated with that file (FC), by each regular language (LR) of a group of regular languages (LR), called control individual (IC), each regular language (LR) of the control individual (IC) being built on a formal alphabet (AF), the formal alphabet (AF) including a plurality of formal letters (LF) able to form formal words (MF) of one or more regular languages (LR);
the module (20) being able to:
- provide a file database (28) comprising a plurality of learning files whose security is known, and associate formal words (MF) with each of these files;
- generate individuals (I) by associating each of them with a group of regular languages (LR), the set of individuals (I) forming a population (P), each individual (I) being associated with a health indicator (IS) characterizing its ability to determine the security of the learning files by using the recognition of the formal words (MF) associated with these files by the regular languages (LR) of this individual (I);
- evolve the population (P) by creating a new individual (I) from two parent individuals (I), each new individual (I) including a combination of regular languages (LR) associated with its parents, and eliminating individuals (I) having health indicators (IS) below a predetermined threshold;
- select a control individual (IC) corresponding to the individual having the best health indicator (IS) in the entire population (P);
- associating the file to be checked (FC) with a formal word to be checked (MFC) constructed on the formal alphabet (AF);
- determining the recognition of the formal word to be checked (MFC) by each regular language (LR) of the control individual (IC);
- determining the security of the file to be checked (FC) as a function of the number of regular languages (LR) of the control individual (IC) having recognized the associated formal word to be checked (MFC) and the number of regular languages (LR) of the control individual (IC) not having recognized it;
the health indicator (IS) of each individual (I) being a function of the number of regular languages (LR) of that individual (I), able to recognize formal words (MF) associated with each of the learning files.

11. A method for constructing a control unit (22) making it possible to implement an algorithm for determining computer file security to detect healthy files and files infected with malware, the security of a file to be checked (FC) being determined by a recognition analysis of a formal word to be checked (MFC) associated with this file (FC), by each regular language (LR) of a group of regular languages (LR), called control individual (IC), each regular language (LR) of the control individual (IC) being constructed on a formal alphabet (AF), the formal alphabet (AF) including a plurality of formal letters (LF) able to form formal words (MF) of one or more regular languages (LR);
the method comprising a learning phase (P₁) for the control individual (IC) including the following steps:
- providing a file database (28) comprising a plurality of learning files whose security is known, and associating formal words (MF) with each of these files;
- generating (110) individuals (I) by associating each of them with a group of regular languages (LR), the set of individuals (I) forming a population (P), each individual (I) being associated with a health indicator (IS) characterizing its ability to determine the security of the learning files by using the recognition of the formal words (MF) associated with these files by regular languages (LR) of this individual (I);
- evolving (120) the population (P), comprising a creation of a new individual (I) from two parent individuals (I), each new individual (I) including a combination of regular languages (LR) associated with its parents, and eliminating (124) individuals (I) having health indicators (IS) below a predetermined threshold for this step (120);
- selecting (130) a control individual (IC) corresponding to the individual having the best health indicator (IS) in the entire population (P);
- providing (150) the selected control individual (IC) to implement the control unit (22);
the health indicator (IS) of each individual (I) being a function of the number of regular languages (LR) of that individual (I), able to recognize formal words (MF) associated with each of the learning files.

12. A computer program product including software instructions which, when implemented by a computer, carry out the method according to claim 11.
